(19) Europäisches Patentamt
European Patent Office
Office européen des brevets

(11) Veröffentlichungsnummer: **0 299 450 A2**

(12) **EUROPÄISCHE PATENTANMELDUNG**

(21) Anmeldenummer: **88111207.2**

(22) Anmeldetag: **13.07.88**

(51) Int. Cl.4: **C08L 83/04**

(30) Priorität: **15.07.87 DE 3723421**

(43) Veröffentlichungstag der Anmeldung: **18.01.89 Patentblatt 89/03**

(84) Benannte Vertragsstaaten: **AT BE CH DE FR GB IT LI NL**

(71) Anmelder: **WACKER-CHEMIE GMBH**
**Prinzregentenstrasse 22**
**D-8000 München 22(DE)**

(72) Erfinder: **Burger, Christa, Dr.-Dipl.-Chem.**
**Stadtplatz 95/96**
**D-8263 Burghausen(DE)**
Erfinder: **Müller, Johann**
**Friedrich-Ebert-Strasse 3**
**D-8263 Burghausen(DE)**
Erfinder: **Bosch, Erhard, Dr.-Dipl.-Chem.**
**Brucknerstrasse 43**
**D-8263 Burghausen(DE)**

# (54) Durch Strahlung zu Elastomeren vernetzbare Massen.

(57) Durch Strahlung zu Elastomeren vernetzbare Massen auf Grundlage von (a) Organopolysiloxan mit Triorganosiloxaneinheiten der Formel

$H_2C=CHCXOR^1SiR_2O_{1/2}$,

worin R, $R^1$ und X jeweils die in Anspruch 1 dafür angegebene Bedeutung haben, während die anderen Siloxaneinheiten als diese Triorganosiloxaneinheiten mindestens zu 80 % ihrer Anzahl Diorganosiloxaneinheiten sind, deren SiC-gebundenen organischen Reste beide einwertige Kohlenwasserstoffreste sind, die halogeniert sein können, (b) Füllstoff mit einer Spezifischen Oberfläche von mindestens 50 $m^2/g$ und gegebenenfalls Photoinitiator, wobei Organopolysiloxan (a) Diorganosiloxaneinheiten enthält, von deren SiC-gebundenen organischen Resten einer eine aliphatische Kohlenstoff-Kohlenstoff-Doppelbindung aufweist, und/oder daß zusätzlich zu den Bestandteilen (a), (b) und gegebenenfalls (c) die Massen mindestens ein (d) Organopolysiloxanharz aus Einheiten der Formel

$R^2_3SiO_{1/2}$ und $R^2SiO_{3/2}$ und/oder $SiO_{4/2}$

enthalten, wobei mindestens ein Teil der $R^2$ Wasserstoff bedeutet, und im Organopolysiloxan (a) die Anwesenheit von bestimmten Siloxaneinheiten in bestimmten Mengen wegen EpAnmeldung Nr. 87 101 641.6 ausgeschlossen ist, wenn in den Massen Organopolysiloxanharz (d) nicht vorliegt.

EP 0 299 450 A2

## Durch Strahlung zu Elastomeren vernetzbare Massen

Aus EP-OS 152 179 (ausgegeben 21. August 1985, Loctite Corporation) sind bereits durch Ultraviolett-Licht vernetzbare Massen auf Grundlage von (a) Organopolysiloxan mit einer Acryloxygruppe aufweisenden Triorganosiloxaneinheiten der Formel

$H_2C=CHCOOR''SiR'_2O_{1/2}$,

worin R′ gleiche oder verschiedene, einwertige, von aliphatischen Doppelbindungen freie Kohlenwasserstoffreste und R″ einen zweiwertigen Kohlenwasserstoffrest bedeutet, während die anderen Siloxaneinheiten als diese Triorganosiloxaneinheiten mindestens zu 80 % ihrer Anzahl Diorganosiloxaneinheiten sind, deren SiC-gebundene organische Reste beide einwertige Kohlenwasserstoffreste ohne aliphatische Doppelbindungen sind, (b) Füllstoff mit einer Spezifischen Oberfläche von mindestens 50 $m^2/g$ und (c) Photoinitiator bekannt.

Es ist Aufgabe der Erfindung, durch Strahlung zu Elastomeren vernetzbare Massen auf Grundlage von (a) Organopolysiloxan mit Triorganosiloxaneinheiten, die solche der oben angegebenen Formel sein können, (b) Füllstoff mit einer Spezifischen Oberfläche von mindestens 50 $m^2/g$ und gegebenenfalls (c) Photoinitiator bereitzustellen, deren Vernetzung durch Strahlung, insbesondere Ultraviolett-Licht, besonders rasch und bei Raumtemperatur erfolgt und die bei der Vernetzung Elastomer mit besonders guten Werten bei physikalischen Prüfverfahren, z.B. mit besonders hoher Reißfestigkeit und besonders hohem Weiterreißwiderstand ergeben. Diese Aufgabe wird durch die Erfindung gelöst.

Gegenstand der Erfindung sind durch Strahlung zu Elastomeren vernetzbare Massen auf Grundlage von (a) Organopolysiloxan mit Triorganosiloxaneinheiten der Formel

$H_2C=CHCXOR^1SiR_2O_{1/2}$,

worin R gleiche oder verschiedene, einwertige, von aliphatischen Mehrfachbindungen freie Kohlenwasserstoffreste, die halogeniert sein können, $R^1$ gleiche oder verschiedene, zweiwertige, von aliphatischen Mehrfachbindungen freie Kohlenwasserstoffreste, die halogeniert sein können und X Sauerstoff oder Schwefel bedeutet, während die anderen Siloxaneinheiten als diese Triorganosiloxaneinheiten mindestens zu 80 % ihrer Anzahl Diorganosiloxaneinheiten sind, deren SiC-gebundenen organischen Reste beide einwertige Kohlenwasserstoffreste sind, die halogeniert sein können, (b) Füllstoff mit einer Spezifischen Oberfläche von mindestens 50 $m^2/g$ und gegebenenfalls (c) Photoinitiator, dadurch gekennzeichnet, daß Organopolysiloxan (a) Diorganosiloxaneinheiten enthält, von deren SiC-gebundenen organischen Resten einer eine aliphatiche Kohlenstoff-Kohlenstoff-Doppelbindung aufweist, und/oder daß zusätzlich zu den Bestandteilen (a), (b) und gegebenenfalls (c) die Massen mindestens ein (d) Organopolysiloxanharz aus Einheiten der Formel

$R^2_3SiO_{1/2}$ und

$R^2SiO_{3/2}$ und/oder

$SiO_{4/2}$

enthalten, wobei $R^2$ jeweils gleiche oder verschiedene, einwertige Kohlenwasserstoffreste bedeutet, die halogeniert sein können, oder Wasserstoff ist, mit der Maßgabe, daß an ein und dasselbe Siliciumatom jeweils nur ein Wasserstoffatom gebunden ist und daß durchschnittlich mindestens 4 Si-gebundene Wasserstoffatome je Molekül dieser Organopolysiloxanharze vorliegen, wobei im Organopolysiloxan (a) die Anwesenheit von Siloxaneinheiten der Formel

$HSR^1SiRO$,

worin R und $R^1$ jeweils die oben dafür angegebene Bedeutung haben, in Mengen von 0,1 bis 5 derartiger Siloxaneinheiten je Rest der Formel

$H_2C=CHCXOR^1$-

ausgeschlossen ist, wenn in den Massen Organopolysiloxanharz (d) nicht vorliegt.

Der Ausschluß der Anwesenheit von Siloxaneinheiten der Formel

$HSR^1SiRO$-

in Mengen von 0,1 bis 5 derartiger siloxaneinheiten je Rest der Formel

$H_2C=CHCXOR^1$

im Organopolysiloxan (a), wenn in den Massen Organopolysiloxanharz (d) nicht vorliegt, ist durch EPAnmeldung Nr. 87 101 641.6 bedingt.

Vorzugsweise sind die Organopolysiloxane (a) solche der Formel (I)

$H_2C=CHCXOR^1SiR_2O(SiR_2O)_m(SiRR^3O)_nSiR_2R^1OXCHC=CH_2$,

woring R, $R^1$ und X jeweils die oben dafür angegebene Bedeutung haben und $R^3$ gleiche oder verschiedene, einwertige SiC-gebundene organische Reste mit einer aliphatischen Kohlenstoff-Kohlenstoff-Doppelbindung bedeutet, m eine ganze Zahl im wert von mindestens 10 und n 0 oder eine ganze Zahl im Wert von 1 bis 10 ist.

Obwohl durch die oben angegebene Formel (I) für bevorzugtes Organopolysiloxan (a), wie bei derartigen Formeln üblich, nicht dargestellt, können im Organopolysiloxan (a) zusätzlich zu den in Formel (I) angegebenen Siloxaneinheiten bis zu insgesamt 5 Molprozent, bezogen auf das gesamte Molekül bzw. die gesamten Moleküle dieser Art, andere, jedoch meist lediglich als mehr oder weniger schwer vermeidbare Verunreinigungen vorliegende Siloxaneinheiten, wie solche der Formel

$R^2_3SiO_{1/2}$ $R^2SiO_{3/2}$, wobei $R^2$ jeweils die oben dafür angegebenen Bedeutung hat, oder $SiO_{4/2}$, vorhanden sein.

Vorzugsweise ist die Summe von m + n eine Zahl, die einer Durchschnittlichen Viskosität vom Organopolysiloxan (a) von 10 bis 100 000 mPa.s bei 25 °C entspricht.

Vorzugsweise ist X Sauerstoff.

Vorzugsweise enthalten die einwertigen und die zweiwertigen, SiC-gebundenen organischen Reste in den erfindungsgemäßen Massen und damit auch die Reste R, $R^1$, $R^2$ und $R^3$ jeweils höchstens 18 Kohlenstoffatome je Rest.

Beispiele für Kohlenwasserstoffreste R sind Alkylreste, wie der Methyl-, Ethyl-, n-Propyl-, Isopropyl-, n-Butyl- und sec.-Butylrest, sowie Octadecylreste; Cycloalkylreste, wie der Cyclohexylrest und Methylcyclohexylreste; Arylreste, wie der Phenylrest und Xenylreste, Alkarylreste, wie Tolylreste; und Aralkylreste, wie der Benzyl- und beta-Phenylethylrest.

Beispiele für halogenierte Kohlenwasserstoffreste R sind der 3-Chlorpropyl- und der 3,3,3-Trifluorpropylrest, sowie o-, p- und m-Chlorphenylreste.

Vorzugsweise sind schon wegen der leichteren Zugänglichkeit mindestens 95 % der Anzahl der Reste R Methylreste.

Zusätzlich zu den bereits angegebenen Siloxaneinheiten können die Organopolysiloxane (a) gegebenenfalls Einheiten der Formel

$RR^4SiO$

enthalten, worin R die oben dafür angegebene Bedeutung hat und $R^4$ ein einwertiger, anders als durch mindestens ein Halogenatom substituierter Kohlenwasserstoffrest ist. Beispiele für substituierte Kohlenwasserstoffreste $R^4$ sind insbesondere Cyanalkylreste, wie der beta-Cyanethylrest;

Vorzugsweise ist $R^1$ ein Rest der Formel

$-(CH_2)_r-$,

worin r eine ganze Zahl im Wert von 1 bis 6, insbesondere 3 ist.

Folglich sind im Organopolysiloxan (a) und damit in der Formel (I) als Triorganosiloxaneinheiten der Formel

$H_2C=CHCXOR^1SiR_2O_{1/2}$

solche der Formel

$H_2C=CHCOO(CH_2)_3Si(CH_3)_2O$

und allgemein als Reste der Formel

$H_2C=CHCXOR^1-$

solche der Formel

$H_2C=CHCOO(CH_2)_3-$

besonders bevorzugt.

$R^1$ kann aber auch z.B. ein verzweigter Alkylrest, wie solcher der Formel

$-CH_2CH(CH_3)CH_2-$ oder

$-CH_2CH(CH_3)-$

sein. Ebenso können z.B. Phenylen, Alkarylenreste, wie solche der Formel

$-(CH_2)C_6H_4-$

Reste $R^1$ sein.

Beispiele für halogenierte Reste $R^1$ sind o-, p- und m-Chlorphenylreste.

Beispiele für Reste $R^3$ sind der Vinyl- und Allyrest, sowie Reste der Formel

$H_2C=CHCXOR^1-$,

worin $R^1$ und X jeweils die oben dafür angegebene Bedeutung haben.

Vorzugsweise ist n 3, 4, 5 oder 6.

Organopolysiloxane (a) der erfindungsgemäß verwendeten Art und der Formel (I), wobei n 0 ist, sind bereits bekannt, nämlich aus der eingangs erwähnten Europäischen Offenlegungsschrift. Organopolysiloxane (a) der erfindungsgemäß verwendeten Art und der Formel (I), wobei n mindestens 1 ist, können in an sich bekannter Weise z.B. durch Äquilibrierung von Organopolysiloxan der Formel (I) mit einem Mischhydrolysat von Dimethyldichlorsilan und Vinylmethyldichlorsilan hergestellt werden.

Als Füllstoff (b) ist Siliciumdioxyd mit einer Spezifischen Oberfläche von mindestens 50 $m^2/g$ besonders bevorzugt. Es kann sich dabei um pyrogen erzeugtes Siliciumdioxyd, unter Erhaltung der Struktur entwässerte Kieselsäurehydrogele , also um sogenannte "Aerogele", oder andere Arten von gefälltem siliciumdioxyd mit einer Spezifischen Oberfläche von mindestens 50 $m^2/g$ oder um Gemische aus mindestens zwei derartiger Siliciumdioxydsorten handeln. Das Siliciumdioxyd kann hydrophil oder, weil es z.B. mit einer hydrophobierenden Organosiliciumverbindung, wie Trimethylethoxysilan, Dimethyldichlorsilan, Octamethylcyclotetrasiloxan oder Hexamethyldisilazan in Anwesenheit von zumindest einem Teil der jeweils zur Herstellung der erfindungsgemäßen Massen verwendeten Menge an Organopolysiloxan (a) oder in Abwesenheit von derartigem Organopolysiloxan, gegebenenfalls in einer Kugelmühle, behandelt wurde, hydrophob sein. Besonders bevorzugt ist durch Behandlung mit Hexamethyldisilazan hydrophobiertes Siliciumdioxyd mit einer Spezifischen Oberfläche von mindestens 100 $m^2/g$.

Die hier in Beschreibung und mindestens einem der Patentansprüche angegebenen Werte für Spezifische Oberflächen sind BET-Werte, also Werte, die durch Stickstoffadsorption gemäß ASTM Special Technical Publication, Nr. 51 (1941), Seite 95 ff, bestimmt werden.

Vorzugsweise enthalten die erfindungsgemäßen Massen Füllstoff (b) in Mengen von 5 bis 50 Gewichtsprozent, insbesondere 15 bis 35 Gewichtsprozent, jeweils bezogen auf das Gesamtgewicht der jeweiligen Masse.

Bei der Strahlung, unter deren Einwirkung die erfindungsgemäßen Massen zu Elastomeren vernetzt werden, kann es sich um Elektronenstrahlung, gamma-Strahlung, Röntgenstrahlung oder, was bevorzugt ist, je nach Aktivität des jeweils in ihnen vorhandenen Photoinitiators (c) um Tageslicht, Licht mit einer Wellenlänge von 400 bis 600 nm (Nanometer), also sogenanntes "Halogenlicht" oder Ultraviolett-Licht, oder ein Gemisch aus mindestens zwei derartiger Bestrahlungsarten, insbesondere aus mindestens zwei derartiger Lichtarten, handeln. Licht mit einer Wellenlänge von 200 bis 300 nm ist besonders bevorzugt. Das Ultraviolett-Licht kann z.B. in Xenon-, Quecksilberdampfniederdruck-, Quecksilberdampfmittel- oder Quecksilberdampfhochdrucklampgen erzeugt werden.

Wenn die erfindungsgemäßen Massen durch mindestens eine der oben angegebenen Lichtarten vernetzt werden sollen, müssen sie mindestens einen Photoinitiator (c) enthalten. Als Photoinitiatoren können sie dabei beliebige Photoinitiatoren enthalten, die in durch Licht vernetzbaren Massen vorliegen können. Beispiele für Photoinitiatoren (c) sind Anthrachinon und substituierte Anthrachinone, wie Chloranthrachinon; Benzophenon und substituierte Benzophenone, wie Hydroxybenzophenone, 2,4-Bis-(trimethylsiloxy)-benzophenone, 4-Methylbenzophenon, 4-Chlorbenzophenon, 4,4′-Dimethoxybenzophenon und 4-Chlor-4′-benzylbenzophenon; Xanthon und substituierte Xanthone, wie 3-Chlorxanthon, 3,9-Dichlorxanthanon und 3-Chlor-8-nonylxanthon; Acetophenon und substituierte Acetophenone, wie Diethoxyacetophenon, 2-Hydroxy-2-methyl-1-phenylpropan-1-on, Trichlorbutylacetophenon, 3-Methylacetophenon, 4-Methylacetophenon und 3-Bromacetophenon; Benzoin und substituierte Benzoine, wie Benzoinalkylether, z.B. Benzoinmethylether, Benzoin, in denen das Wasserstoffatom der Hydroxylgruppe des Benzoins durch ein Siliciumaton eines cyclischen Organopolysiloxans ersetzt ist, wie sie in DE-OS 31 23 676 (offengelegt 8. April 1982, Shin-Etsu chemical Co., Ltd.) beschrieben sind, und Benzoin-Derivate, die durch Umsetzung von z.B. Benzoin mit z.B. Triethanolamin in Abwesenheit von direkt an Silicium gebundenem Halogen, von Säure, die saurer ist als Benzoin und von Base, die basischer ist als Triethanolamin, erhältlich sind; Thioxanthon und substituierte Thioxanthone; Benzil und substituierte Benzile, wie Benzilketale; sowie Fluorenon und substituierte Fluorenone. Zusätzlich zu den bereits genannten einzelnen Beispielen für Photoinitiatoren (c) seien als weitere einzelne Beispiele für Photoinitiatoren (c) genannt; Mesityloxyd, Propiophenon, Benzaldehyd, Carbazol und Michler's Keton.

Unter den Photoinitiatoren (c) sind solche bevorzugt, die in den erfindungsgemäßen Massen löslich sind, was sich durch einfache Handversuche leicht feststellen läßt.

Vorzugsweise enthalten die erfindungsgemäßen Massen, wenn sie durch mindestens eine der oben angegebenen Lichtarten vernetzt werden sollen, Photoinitiator (c) in Mengen von 0,05 bis 10 Gewichtsprozent, insbesondere 0,5 bis 6 Gewichtsprozent, jeweils bezogen auf das Gesamtgewicht der jeweiligen Masse.

Wenn Organopolysiloxan (a) zusätzlich zu den Triorganosiloxaneinheiten der Formel

$H_2C=CHCXOR^1SiR_2O_{1/2}$

keine SiC-gebundenen organischen Reste mit einer aliphatischen Kohlenstoff-Kohlenstoff-Doppelbindung enthält oder n bei Formel (I) 0 ist, müssen die erfindungsgemäßen Massen mindestens ein Organopolysiloxanharz aus Einheiten der Formel

$R^2_3SiO_{1/2}$ und

$R^2SiO_{3/2}$ oder

$SiO_{4/2}$

oder aus Einheiten der Formel

$R^2_3SiO_{1/2}$, $R^2SiO_{3/2}$ und $SiO_{4/2}$,

worin $R^2$ jeweils die oben dafür angegebenen Bedeutung hat, enthalten.

Wenn Organopolysiloxan (a) zusätzlich zu den Triorganosiloxaneinheiten der Formel

$H_2C=CHCXOR^1SiR_2O_{1/2}$

SiC-gebundene organische Reste mit einer aliphatischen Kohlenstoff-Kohlenstoff-Doppelbindung enthält oder n bei Formel (I) mindestens 1 ist, können die erfindungsgemäßen Massen mindestens ein Organopolysiloxanharz aus Einheiten der Formel

$R^2_3SiO_{1/2}$ und

$R^2SiO_{3/2}$ oder

$SiO_{4/2}$

oder aus Einheiten der Formel

$R^2_3SiO_{1/2}$, $R^2SiO_{3/2}$ und $SiO_{4/2}$

worin $R^2$ jeweils die oben dafür angegebene Bedeutung hat, enthalten.

Die oben genannten Beispiele für SiC-gebunden organisch Reste R und $R^3$ gelten in vollem Umfang auch für SiC-gebundene organische Reste $R^2$. Est ist jedoch bevorzugt, daß $R^2$ die gleiche Bedeutung wie R hat, insbesondere ein Methylrest ist, wenn $R^2$ nicht Wasserstoff ist.

Bevorzugt sind Organopolysiloxanharze aus Einheiten der Formel

$R^2_3SiO_{1/2}$ und $SiO_{4/2}$,

wobei $R^2$ die oben dafür angegebene Bedeutung hat.

Besonders bevorzugt sind Organopolysiloxanharze aus Einheiten der Formel

$HR_2SiO_{1/2}$ und $SiO_{4/2}$,

wobei R die oben dafür angegebene Bedeutung hat.

Das Verhältnis der Anzahl der Einheiten der Formel

$R^2SiO_{3/2}$

zur Anzahl der Einheiten der Formel

$R^2_3SiO_{1/2}$

oder das Verhältnis der Anzahl der Einheiten der Formel

$SiO_{4/2}$

zur Anzahl der Einheiten der Formel

$R^2_3SiO_{1/2}$

oder das Verhältnis der Anzahl der Einheiten der Formel

$R^2SiO_{3/2}$ und $SiO_{4/2}$

zur Anzahl der Einheiten der formel

$R^2_3SiO_{1/2}$

beträgt vorzugsweise 0,1 : 1 bis 3 : 1, bevorzugter 0,2 : 1 bis 2 : 1 und insbesondere 0,3 : 1 bis 1 : 1.

Die Organopolysiloxanharze mit den Substituenten $R^2$ können beispielsweise durch Umsetzung von Silan der Formel

$R^2Si(OR^4)_3$,

worin $R^2$ die oben dafür angegebene Bedeutung hat und $R^4$ gleiche oder verschiedene Alkylreste mit 1 bis 4 Kohlenstoffatomen je Rest bedeutet, wie Methyltrimethoxysilan, und/oder Silan der Formel

$Si(OR^4)_4$,

worin $R^4$ die oben dafür angegebene Bedeutung hat, wie Tetraethoxysilan; mit mindestens einem Disiloxan der Formel

$R^2_3SiOSiR^2_3$,

worin $R^2$ die oben dafür angegebene Bedeutung hat, wie 1,3-Dihydrogen-1,1,3,3-tetramethyldisiloxan, und Wasser in Gegenwart eines Katalysators für derartige Umsetzungen, wie konzentrierte Salzsäure, in an sich bekannter Weise hergestellt werden.

Die Organopolysiloxanharze mit den Substituenten $R^2$ können bei Raumtemperatur flüssig sein und eine Viskosität von mindestens 100 mPa.s bei 25 °C aufweisen oder bei Raumtemperatur fest sein. Vorzugsweise sind sie flüssig und besitzen sie eine Viskosität von 500 bis 20 000 mPa.s bei 25 °C, insbesondere 1000 bis 10 000 mPa.s bei 25 °C.

Vorzugsweise sind die Organopolysiloxanharze mit den Substituenten $R^2$ in den erfindungsgemäßen Massen in Harzmengen von 1 bis 25 Gewichtsprozent, bevorzugter in Harzmengen von 2 bis 20 Gewichtsprozent, jeweils bezogen auf das Gesamtgewicht der jeweiligen Masse, enthalten.

Zusätzlich zu den wesentlichen Bestandteilen (a) und (b) und gegebenenfalls (d) sowie gegebenenfalls (c) können die erfindungsgemäßen Massen, falls erwünscht, weitere Stoffe enthalten, wie sie auch bisher in durch Strahlung, insbesondere Licht, vernetzbaren Massen zusätzlich zu anderen Stoffen vorliegen konnten.

Beispiele für derartige zusätzliche Stoffe sind Füllstoffe mit einer Spezifischen Oberfläche von weniger als 50 $m^2/g$, wie Quarzmehl, Kreidepulver oder Diatomeenerde, wobei auch diese Füllstoffe hydrophil oder hydrophob sein können, organische Farbstoffe, insbesondere solche, welche die Wirksamkeit von Photoinitiatoren fördern, weil sie (die Farbstoffe) Absorptionsmaxima im Bereich von 300 bis 500 nm aufweisen, wie Nitrazingelb, Disperse Organe 3 und/oder Nilblau A, Zusätze zur Verhinderung von thermischer Vernetzung, Alterungsschutzmittel und Mittel zur Verbesserung der Haftung der vernetzten Organopolysiloxane auf den Unterlagen, auf denen sie erzeugt wurden, wie Butandioldiacrylsäureester, gamma-Glycidoxypropyltrimethoxysilan und Organopolysiloxan der Formel (I), worin jedoch m 0 oder eine ganze Zahl im wert von 1 bis 9 ist.

Die Herstellung der erfindungsgemäßen Massen kann durch einfaches Vermischen ihrer Bestandteile miteinander erfolgen. Flüchtige Bestandteile können auf diesen Massen durch Erniedrigen des Drucks auf z.B. 1 hPa (abs.) nach diesem Vermischen entfernt werden.

Die erfindungsgemäßen Massen können überall dort eingesetzt werden, wo durch Strahlung zu Elastomeren vernetzende Massen eingesetzt werden können, beispielsweise zur Herstellung von Beschichtungen, z.B. von Textilien aus organischen Fasern oder von Glasfasern, einschließlich Lichtleitfasern, wobei es sich bei Beschichtungen aus erfindungsgemäßen Massen auch um klebrige Stoffe abweisende Überzüge handeln kann, zur Herstellung von Formteilen, wie O-Ringen, zur Herstellung von Dichtungen, einschließlich sogenannter "formed in press gaskets", solange Lichtzutritt z.B. durch ein Fenster beispielsweise aus Fensterglas gesichert ist, wenn es sich bei der Strahlung um Licht handelt, zur Herstellung von Folien und Membranen, zur Herstellung von Isolierungen von elektrischen bzw. elektronischen Bauteilen, wie Hybridschaltkreisen z.B. für elektronische Zündungen, von Modulen, photovoltaischen Solargeneratoren und anderen Halbleiteranordnungen.

Anwendungen mit Schichtdicken von 0,5 mm bis 2 cm, sind bevorzugt.

Im folgenden beziehen sich alle Angaben von Teilen und Prozentsätzen auf das Gewicht, soweit nichts anderes angegeben ist. Bei Angaben von Volumteilen verhalten sich diese zu Gewichtsteilen, wie 1 ml zu 1 g.

Herstellung von in den folgenden Beispielen verwendeten Organopolysiloxanen:

A) a) Zu einem Gemisch aus 116 Teilen Allylakohol und 4,6 Volumteilen einer 1%-igen Lösung von Platin in Form von $PtCl_6.6H_2O$ in Isopropanol, das auf 80°C erwärmt ist, werden 800 Teile in den endständigen Einheiten je ein Si-gebundenes Wasserstoffatom enthaltendes Organopolysiloxan der Formel

$HSi(CH_3)_2O[Si(CH_3)_2O]_9Si(CH_3)_2H$

tropfenweise gegeben. Anschließend wird eine Stunde bei 100°C gerührt. Nachdem sich das so erhaltene Organopolysiloxan, das aufgrund des Kernmagnetischen Resonanzspektrums die Formel

$HO(CH_2)_3Si(CH_3)_2O[Si(CH_3)_2O]_9Si(CH_3)_2(CH_2)_3OH$

hat, auf 50°C abgekühlt hat, wird es mit 100 Teilen säurebehandelten Montmorillonit, 432 Teilen Acrylsäure und 0,65 Teilen Bis-(tert.-butyl)-kresol (als Mittel zur Verhinderung der Polymerisation der Acrylsäure) vermischt. Die so erhaltene Mischung wird unter Rühren 2 Stunden auf 110°C erwärmt. Anschließend wird vom Montmorrillonit abfiltriert. Nachdem aus dem filtrat die bis zu 80°C bei 130 hPa (abs.) siedenden Stoffe abdestilliert wurden, werden 860 Teile (90,6% der Theorie) eines schwach gelblichen, klaren Öls erhalten das aufgrund des Kernmagnetischen Resonanzspektrums die Formel

$H_2C=CHCOO(CH_2)_3Si(CH_3)_2O[Si(CH_3)_2O]_9Si(CH_3)_2(CH_2)_3OOCHC=CH_2$

hat.

b) Eine Mischung aus 62,4 Teilen eines in den endständigen Einheiten je eine Si-gebundene Hydroxylgruppe aufweisenden Dimethylpolysiloxans mit durchschnittlich 100 Si-Atomen je Molekül, 2,4 Teilen des Organopolysiloxans mit Acryloxypropylgruppen, dessen Herstellung vorstehend unter a) beschrieben wurde, und 11 Teilen Toluol wird nach Vermischen mit 0,054 Teilen einer 25%-igen Lösung von Phosphornitridchloriden in Methylenchlorid 2 Stunden zum Sieden unter Rückfluß erwärmt. Das dabei gebildete Wasser wird in einer Dean-Stark-Falle aufgefangen. Dann werden die Phosphornitridchloride durch Zugabe von 0,108 Teilen Triisononylamin unwirksam gemacht. Dadurch wird die Lösung durch eine Schicht aus Aktivkohle und Diatomeenerde filtriert. Aus dem Filtrat werden die bis zu 80°C bei 100 Pa (abs.) siedenden Bestandteile abdestilliert. Das in einer Ausbeute von 63 Teilen (97% der Theorie) erhaltene farblose, klare Öl hat eine Viskosität von 4200 mPa.s bei 25°C.

B) Die vorstehend unter b) beschriebene arbeitsweise wird wiederholt mit der Abänderung, daß anstelle der 2,4 Teile des Organopolysiloxans mit Acryloxypylgruppen in den endständigen Einheiten, dessen Herstlelung oben unter A) a) beschrieben wurde, 2,0 Teile dieses Organopolysiloxans verwendet werden.

Das in einer Ausbeute von 62,5 Teilen (97% d.Th.) erhaltene farblose, klare Öl hat eine Viskosität von 6000 mPa.s bei 25° C.

C) Die oben unter A) b) beschriebene arbeitsweise wird wiederholt mit der Abänderung, daß anstelle der 2,4 Teile des Organopolysiloxans mit Acryloxpropylgruppen in den endständigen Einheiten, dessen Herstellung oben unter A) a) beschrieben wurde, 1,75 Teile dieses Organopolysiloxans verwendet werden. Das in einer Ausbeute von 62 Teilen (96% d.Th.) erhaltene farblose, klare Öl hat eine Viskosität von 11500 mPa.s bei 25° C.

D) Zu einer Mischung aus 2990 Teilen eines in den endständigen Einheiten je eine Si-gebundene Hydroxylgruppe aufweisenden Dimethylpolysiloxans mit durchschnittlich 80 Siliciumatomen je Molekül und 96 Gewichtsteilen eines in den entständigen Einheiten je eine Si-gebunden Hydroxylgruppe aufweisenden Mischpolymerisats aus 80 Molprozent Dimethylsiloxan- und 20 Molprozent Vinylmethylsiloxaneinheiten mit einer Viskosität von 120 mPa.s bei 25° C werden zunächst 82 Teile des Organopolysiloxans mit Acryloxypropylgruppen in den endständigen Einheiten, dessen Herstellung oben unter A) a) beschrieben wurde, und dann 1,3 Volumteile der 25%-igen Lösung von Phosphornitridchloriden in Methylenchlorid gegeben. Das so erhaltene Gemisch wird unter Rühren 75 Minuten unter dem Druck der umgebenden ätmosphäre auf 100° C und 15 Minuten bei 2 hPa (abs.) auf 100° C erwärmt. Dann werden die Phosphornitridchloride durch Zugabe von 2 Teilen tert.-Octylamin neutralisiert. Das so nach dem Abfiltrieren von den Neutralisationsprodukten in einer Ausbeute von 2978 Teilen (94% d.Th.) erhaltene farblose, klare Öl hat eine Viskosität von 13 400 mPa.s bei 25° C. Es enthält aufgrund des Kernmagnetischen Resonanzspektrums durchschnittlich 720 Dimethylsiloxaneinheiten, 5 Vinylmethylsiloxaneinheiten und 2 Acryloxypropylgruppen je Molekül.

E) Zu einer Mischung aus 416 Teilen Tetraethoxysilan und 134 Teilen 1,3-Dihydrogen-1,1,3,3-tetramethyldisiloxan wird unter raschem Rühren ein Gemisch aus 72 Teilen Wasser und 3 Teilen konzentrierter Salzsäure tropfenweise gegeben. Das so erhaltene Gemisch wird 1 Stunde bei 110° C und dem Druck der umgebenden Atmosphäre gerührt, wobei die unter diesen Bedingungen siedenden Bestandteile abdestillieren gelassen werden. Danach wird durch Zugabe von 6 Teilen Magnesiumoxyd neutralisiert und filtriert. Das Filtrat wird mit Natriumsulfat getrocknet. Nach dem Abdekantieren vom Natriumsulfat werden mittels eines Rotationsverdampfers die bei bis zu 40° C und 1 hPa (abs.) siedenden Bestandteile abdestilliert. Das in einer Ausbeute von 187 Teilen (96 % der Theorie) zurückbleibende farblose, klare Öl hat eine Viskosität von 3500 mPa.s bei 25° C. Es enthält je $SiO_{4/2}$-Einheit 0,8 Dimethylhydrogensiloxaneinheiten.

F) Zu einer Mischung aus 356 Teilen Methyltriethoxysilan und 150 Teilen 1,3-Dihydrogen-1,1,3,3-tetramethyldisiloxan wird unter raschem Rühren ein Gemisch aus 52 Teilen Wasser und 5,9 Teilen konzentrierter Salzsäure tropfenweise gegeben. Das so erhaltene Gemisch wird 1 Stunde bei Raumtemperatur gerührt, 1 Stunde unter Rühren zum Sieden unter Rückfluß erwärmt und nach dem Abkühlen auf etwa 40° C durch Zugabe von 6 Teilen Cacliumcarbonat und 30 Minuten Rühren neutralisiert. Dann wird filtriert und aus dem Filtrat werden die bis zu 40° C bei 1 hPa (abs.) siedenden Bestandteile abdestilliert. Das in einer Ausbeute von 195 Teilen (91% der Theorie) zurückbleibende farblose, klare Öl hat eine Viskosität von 1050 mPa.s bei 25° C. Es enthält je $CH_3SiO_{3/2}$-Einheit 0,6 Dimethylhydrogensiloxaneinheiten.

Beispiele 1 bis 6 und Vergleichsversuche a bis d

In einem Laborkneter werden die in der folgenden Tabelle angegebenen Stoffe sowie 2% 2-Hydroxy-2methyl-1-phenylpropan-1-on, bezogen auf das Gesamtgewicht der jeweiligen Mischung, miteinander vermischt.

Die so erhaltenen Massen werden in flache Formen mit einer Tiefe von 2 mm bzw. 6 mm gegossen. Die Formen werden mit Fensterglas mit einer Dicke von 2 mm bedeckt, um Elastomere mit glatter Oberfläche zu erhalten, und der Inhalt der Formen wird durch das Fensterglas in einem Abstand von 10 cm mit einem handelsüblichen Ultraviolett-Licht-Gerät ("Beltrolux", wobei es sich bei dieser Bezeichnung um ein Registriertes Warenzeichen handeln dürfte, der Firma Beltron GmbH, D-6074 Rödermark) 30 Sekunden bei den Formen mit einer Tiefe von 2 mm und 60 Sekunden bei den übrigen Formen bestrahlt. In der folgenden Tabelle sind auch Werte, die bei physikalischen Prüfungen der so erhaltenen Elastomerfolien erhalten werden, angegeben.

Tabelle

| Beispiel bzw. Vergleichsversuch | Organopolysiloxan,hergestellt gemäß % | Organopolysiloxan,hergestellt gemäß E) % | Siliciumdioxyd 1) % | Werte, erhalten bei physikalischen Prüfverfahren | | | |
|---|---|---|---|---|---|---|---|
| | | | | Shore-A-Härte | 2) N/mm² | 3) % | 4) N/mm² |
| 1 | A 65,6 | 7,4 | 25 | 40 | 4,6 | 430 | 32,3 |
| a | A 65,6 | 0 | 32,4 | 36 | 3,5 | 260 | 16,6 |
| 2 | A 68,6 | 4,4 | 25 | 36 | 6,3 | 580 | 29,4 |
| b | A 68,6 | 0 | 29,4 | 32 | 3,3 | 290 | 9,1 |
| 3 | B 65,6 | 4,4 | 25 | 30 | 5,1 | 420 | 24,5 |
| c | B 65,6 | 0 | 29,4 | 29 | 2,8 | 320 | 15,8 |
| 4 | C 68,6 | 4,4 | 25 | 23 | 4,2 | 710 | 25 |
| d | C 68,6 | 0 | 29,4 | 25 | 2,9 | 650 | 18,5 |
| 5 | D 73 | 0 | 25 | 27 | 7,2 | 900 | 43,3 |
| 6 | B 65,6 | 4,4 | 25 | 29 | 3,6 | 380 | 18,2 |
| Erläuterungen zur Tabelle: | | | | | | | |

1) mit Hexamethyldisilazan hydrophobiertes, pyrogen erzeugtes Siliciumdioxyd mit einer Oberfläche von 300 $m^2$/g
2) Reißfestigkeit
3) Reißdehnung
4) Weiterreißwiderstand
5) Organopolysiloxan, nicht hergestellt gemäß E), sondern gemäß F)

## Ansprüche

1. Durch Strahlung zu Elastomeren vernetzbare Massen auf Grundlage von (a) Organopolysiloxan mit Triorganosiloxaneinheiten der Formel

$H_2C = CHCXOR^1SiR_2O_{1/2}$

worin R gleiche oder verschiedene, einwertige, von aliphatischen Mehrfachbindungen freie Kohlenwasserstoffreste, die halogeniert sein können, $R^1$ gleiche oder verschiedene, zweiwertige, von aliphatischen Mehrfachbindungen freie Kohlenwasserstoffreste, die halogeniert sein können, und X Sauerstoff oder Schwefel bedeutet, während die anderen Siloxaneinheiten als diese Triorganosiloxaneinheiten mindestens zu 80 % ihrer Anzahl Diorganosiloxaneinheiten deren SiC-gebundenen organischen Reste beide einwertige Kohlenwasserstoffreste sind, die halogeniert sein können, (b) Füllstoff mit einer Spezifischen Oberfläche von mindestens 50 $m^2/g$ und gegebenenfalls (c) Photoinitiator, dadurch gekennzeichnet, daß Organopolysiloxan (a) Diorganosiloxaneheiten enthält, von deren SiC-gebundenen organischen Resten einer eine aliphatische Kohlenstoff-Kohlenstoff-Doppelbindung aufweist, und/oder daß zusätzlich zu den Bestandteilen (a), (b) und gegebenenfalls (c) die Massen mindestens ein (d) Organopolysiloxanharz aus Einheiten der formel

$R_3^2SiO_{1/2}$ und

$R^2SiO_{3/2}$ und/oder

$SiO_{4/2}$

enthalten, wobei $R^2$ jeweils gleiche oder verschiedene, einwertige Kohlenwasserstoffreste bedeutet, die halogeniert sein können, oder wasserstoff ist mit der Maßgabe, daß an ein und dasselbe Siliciumatom jeweils nur ein Wasserstoffatom gebunden ist und daß durchschnittlich mindestens 4 Si-gebundene Wasserstoffatome je Molekül dieser Organopolysiloxane vorliegen, wobei im Organopolysiloxan (a) die Anwesenheit von Siloxaneinheiten der Formel

$HSR^1SiRO$,

worin R und $R^1$ jeweils die oben dafür angegebene Bedeutung haben, in Mengen von 0,1 bis 5 derartiger Siloxaneinheiten je Rest der Formel

$H_2C = CHCXOR^1$-

ausgeschlossen ist, wenn in den Massen Organopolysiloxanharz (d) nicht vorliegt.

2. Massen nach Anspruch 1, dadurch gekennzeichnet, daß sie als Organopolysiloxane (a) solche der Formel (I)

$H_2C = CHCXOR^1SiR_2O(SiR_2O)_m(SiRR^3O)_nSiR_2R^1OXCHC = CH_2$,

worin R, $R^1$ und X jeweils die oben dafür angegebene Bedeutung haben und $R^3$ gleiche oder verschiedene, einwertige SiC-gebundene organische Reste mit einer aliphatischen Kohlenstoff-Kohlenstoff-Doppelbindung bedeutet, m eine ganze Zahl im Wert von mindestens 10 und n 0 oder eine ganze Zahl im Wert von 1 bis 10 ist, enthalten.

3. Massen nach Anspruch 1 oder 2, dadurch gekennzeichnet, daß X Sauerstoff ist.

4. Massen nach mindestens einem der Ansprüche 1 bis 3, dadurch gekennzeichnet, daß sie als Organopolysiloxanharz (d) solches aus Einheiten der Formel

$R_3^2SiO_{1/2}$ und $SiO_{4/2}$,

worin $R^2$ die in Anspruch 1 dafür angegebene Bedeutung hat, enthalten.

5. Massen nach mindestens einem der Ansprüche 1 bis 4, dadurch gekennzeichnet, daß sie als Organopolysiloxanharz (d) solches aus Einheiten der Formel

$HR_2SiO_{1/2}$ und $SiO_{4/2}$,

wobei R die in Anspruch 1 dafür angegebene Bedeutung hat, enthalten.

6. Massen anch mindestens einem der Ansprüche 1 bis 5, dadurch gekennzeichnet, daß beim Organopolysiloxanharz (d) das Verhältnis der Anzahl der Einheiten der Formel

$SiO_{4/2}$

zur Anzahl der Einheiten der formel

$R_3^2SiO_{1/2}$

0,3 : 1 bis 1 : 1 beträgt.